# FASCICULE DE BREVET EUROPEEN

(11) **EP 0 734 937 B1**
(45) Date de publication et mention de la délivrance du brevet: **07.01.1999**
(21) Numéro de dépôt: 96400655.5
(22) Date de dépôt: 27.03.1996
(51) Int. Cl.: B62D 1/18

(54) **Système de verrouillage de sécurité pour un ensemble de colonne de direction réglable en position, notamment de véhicule automobile**
Sicherheitsverriegelung für eine einstellbare Lenksäule, insbesondere für Kraftfahrzeuge
Safety lock for an adjustable steering column, especially for a motor vehicle

(30) Priorité: 28.03.1995 FR 9503634
(43) Date de publication de la demande: 02.10.1996
(73) Titulaire: ECIA - EQUIPEMENTS ET COMPOSANTS POUR L'INDUSTRIE AUTOMOBILE, F-25400 Audincourt (FR)
(72) Inventeur: Passebecq, Ghislain, 25400 Audincourt (FR)
(74) Mandataire: Habasque, Etienne Joel Jean-François

(56) Documents cités:
- EP-A- 0 179 690
- EP-A- 0 529 769
- DE-A- 1 925 642
- US-A- 4 075 903

## Description

La présente invention concerne un système de verrouillage de sécurité pour un ensemble de colonne de direction réglable en position notamment de véhicule automobile.

On connaît déjà dans l'état de la technique, des ensembles de colonnes de direction qui comportent une structure de fixation de l'ensemble sur le reste de la structure du véhicule et dans laquelle est monté réglable en position un corps de colonne de direction, dans lequel est monté rotatif un arbre de direction.

La structure de fixation comporte par exemple deux flasques latéraux parallèles et espacés, entre lesquels s'étend le corps de colonne, ce corps et cette structure comportant des moyens complémentaires de verrouillage du corps en position dans la structure, déplaçables entre une position active, de blocage du corps en position dans celle-ci et une position escamotée, de libération du corps, pour permettre son réglage en position dans la structure.

Le réglage en position du corps dans la structure peut par exemple être un réglage en position axiale et/ou angulaire, permettant d'adapter la position du volant de direction à la morphologie du conducteur du véhicule.

Différents modes de réalisation des moyens de verrouillage de la position du corps dans la structure ont été décrits dans l'état de la technique.

C'est ainsi par exemple que ces moyens peuvent comporter un tirant s'étendant entre les flasques de la structure, dont l'une des extrémités comporte des moyens de butée adaptés pour coopérer avec l'un des flasques de la structure et dont l'autre extrémité est associée à des moyens de blocage du corps, par exemple par rapprochement des flasques.

Différents modes de réalisation de ces moyens de blocage ont également été décrits dans l'état de la technique et ceux-ci peuvent par exemple comporter des moyens à billes, à rampes ou encore à genouillères, etc...

Ces moyens de blocage peuvent être des moyens de blocage actionnés par exemple par un levier dont la position est contrôlée par un utilisateur ou encore par des moyens de motorisation pilotés par l'utilisateur.

On conçoit alors que les moyens de verrouillage permettent de bloquer le corps en position dans la structure de fixation par friction consécutivement à un serrage par exemple de pièces, c'est-à-dire du corps entre les flasques de la structure.

Or, un tel verrouillage en position présente un certain nombre d'inconvénients notamment de fiabilité et de maintien en position du corps, par exemple lors du déclenchement du fonctionnement d'un module à sac gonflable intégré par exemple dans le volant de direction de cet ensemble de colonne ou lors d'un impact par exemple des genoux du conducteur du véhicule sur le volant ou le corps de colonne de direction.

Dans ces cas, ce corps a alors tendance à se déplacer, entraînant un déplacement du volant et donc un décalage du sac gonflable ce qui se traduit par des risques de blessures du conducteur.

On a déjà proposé d'incorporer dans de tels ensembles, des moyens complémentaires d'immobilisation de sécurité (voir par exemple le document US-A-4 075 903 qui décrit un système conforme au préambule de la revendication 1).

Le but de l'invention est de perfectionner les systèmes de sécurité de ce type.

A cet effet, l'invention a pour objet un système de verrouillage de sécurité pour un ensemble de colonne de direction réglable en position notamment de véhicule automobile, du type comportant une structure de fixation de l'ensemble sur le reste de la structure du véhicule et dans laquelle est monté réglable en position un corps de colonne de direction, dans lequel est monté rotatif un arbre de direction, le corps et la structure comportant des moyens complémentaires de verrouillage du corps en position dans la structure, déplaçables entre une position active de blocage du corps en position dans celle-ci et une position escamotée de libération du corps, pour permettre son réglage en position dans la structure, la structure et le corps comportant en outre des moyens complémentaires d'immobilisation de sécurité du corps en position de réglage dans la structure, déplaçables sous la commande des moyens de verrouillage, entre une position active d'immobilisation de sécurité et une position escamotée de réglage de la position du corps, caractérisé en ce que les moyens d'immobilisation de sécurité comprennent au moins deux pions reliés à l'une des pièces, structure ou corps de colonne, et adaptés pour coopérer avec des évidements complémentaires de l'autre pièce, corps de colonne ou structure, et délimitant des positions d'immobilisation de sécurité le long de la course de réglage du corps dans la structure, les pions et les évidements complémentaires étant décalés pour réduire la distance séparant deux positions d'immobilisation de sécurité consécutives.

L'invention sera mieux comprise à l'aide de la description qui va suivre donnée uniquement à titre d'exemple et faite en se référant aux dessins annexés, sur lesquels :
- la figure 1 représente une vue schématique de côté d'un exemple de réalisation d'un ensemble de colonne de direction réglable en position notamment de véhicule automobile ;
- la figure 2 représente une vue schématique de face en coupe de l'ensemble de colonne de direction représenté sur la figure 1 ;
- la figure 3 représente une vue schématique de côté d'un système de verrouillage de sécurité illustrant un mode de réalisation d'un pion adapté pour constituer les pions du système selon l'invention;
- la figure 4 représente une vue en coupe d'un tel système de verrouillage de sécurité, prise selon la ligne IV-IV de la figure 3 ; et
- la figure 5 représente un organe en forme de came de manoeuvre d'un pion entrant dans la constitution d'un système de verrouillage de sécurité selon l'invention.

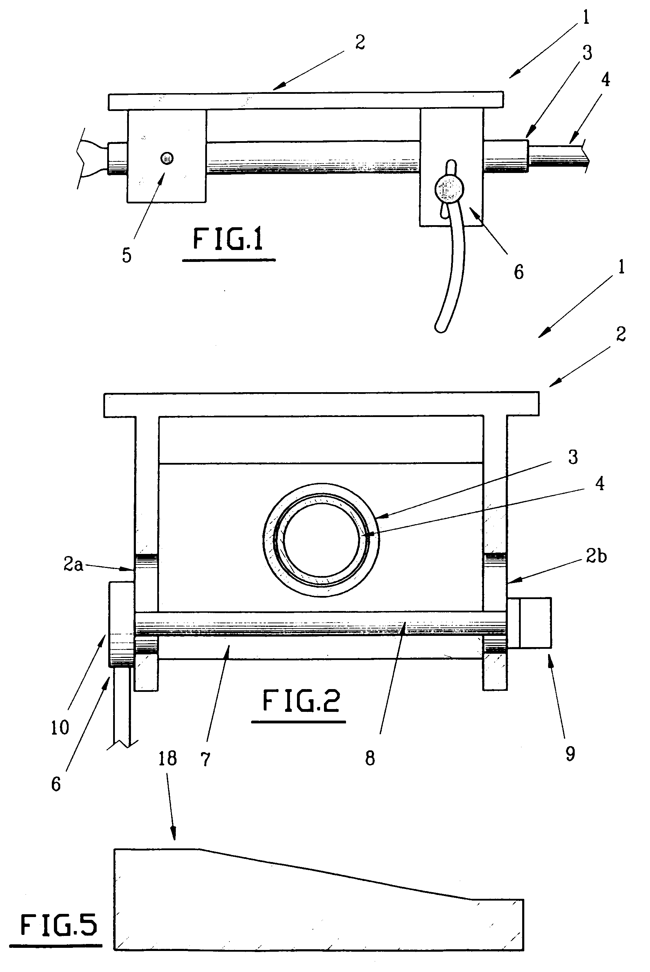

On reconnaît sur les figures 1 et 2, un ensemble de colonne de direction réglable en position notamment de véhicule automobile, désigné par la référence générale 1.

De façon classique, cet ensemble de colonne de direction comporte une structure 2 de fixation de l'ensemble de colonne sur le reste de la structure du véhicule et dans laquelle est monté réglable en position un corps de colonne de direction, désigné par la référence générale 3, dans lequel est monté rotatif un arbre de direction désigné par la référence générale 4.

De façon classique, l'une des extrémités de cet arbre de direction est adaptée pour recevoir le volant de direction, tandis que l'autre extrémité de celui-ci est adaptée pour être reliée au reste du mécanisme de direction du véhicule, par l'intermédiaire par exemple d'un mécanisme à la cardan.

De façon classique également, et selon l'exemple de réalisation décrit en regard de ces figures, l'une des extrémités du corps de colonne de direction est articulée en 5 sur la structure de fixation 2, tandis que l'autre extrémité de celui-ci est associée à des moyens 6 de verrouillage du corps en position dans la structure, déplaçables entre une position active, de blocage du corps dans celle-ci et une position escamotée, de libération du corps, pour permettre son réglage en position dans la structure.

Ainsi qu'on l'a mentionné précédemment, ces moyens de verrouillage permettent, en position escamotée, un réglage de la position axiale et/ou angulaire du corps de colonne de direction dans la structure, pour adapter la position du volant de direction à la morphologie du conducteur du véhicule.

Dans l'exemple de réalisation décrit sur ces figures 1 et 2, le corps est monté réglable en position angulaire dans la structure de fixation, et plus particulièrement entre des flasques latéraux, par exemple 2a et de 2b de celle-ci.

Comme on peut le voir plus particulièrement sur la figure 2, le corps de colonne de direction 3 est par exemple relié à une pièce de montage 7, traversée par un tirant 8 s'étendant entre les flasques 2a et 2b de la structure de fixation 2 et déplaçable dans des lumières correspondantes de ces flasques lorsque les moyens de verrouillage sont en position escamotée.

L'une des extrémités du tirant comporte des moyens de butée 9, tandis que l'autre extrémité de celui-ci est reliée à des moyens de blocage 10 permettant d'obtenir une immobilisation du corps de colonne 3 en position de réglage dans la structure 2, par rapprochement des flasques 2a et 2b et serrage de la pièce de montage 7, entre ces flasques.

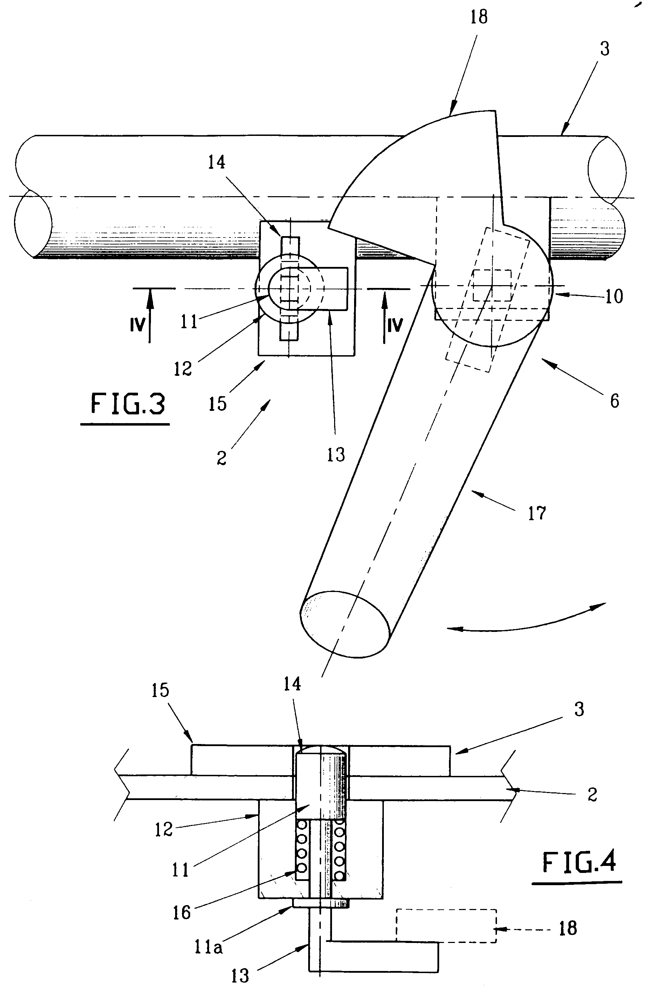

Pour résoudre les problèmes évoqués précédemment à propos du maintien en position du corps dans la structure lors d'un choc par exemple, un tel ensemble de colonne de direction est équipé d'un système de verrouillage de sécurité comportant, comme on peut le voir sur les figures 3,4 et 5, des moyens complémentaires d'immobilisation de sécurité du corps en position de réglage dans la structure, ces moyens étant déplaçables sous la commande des moyens de verrouillage 6 entre une position active d'immobilisation de sécurité et une position escamotée de réglage de la position du corps.

Ces moyens d'immobilisation complémentaires sont prévus sur la structure de fixation et sur le corps.

Ces moyens d'immobilisation de sécurité comportent par exemple au moins deux pions reliés à l'une des pièces, structure ou corps, et adaptés pour coopérer avec des évidements complémentaires de l'autre pièce, corps ou structure, ces évidements délimitant différentes positions d'immobilisation de sécurité le long de la course de réglage du corps dans la structure.

De plus, ces pions sont déplaçables entre une position active d'immobilisation et une position escamotée sous la commande des moyens de verrouillage 6.

Selon le mode de réalisation représenté sur les figures 3,4 et 5, un tel pion de ces moyens est désigné par la référence 11 et est disposé dans une douille 12 fixée sur la structure 2 et plus particulièrement sur l'un des flasques latéraux de celle-ci. Ce pion comporte une portion de manoeuvre désignée par la référence générale 13 sur les figures 3 et 4, se présentant par exemple sous la forme d'un L dont une branche est raccordée à la portion principale du pion 11 et dont l'autre branche est adaptée pour coopérer, comme cela sera décrit plus en détail par la suite, avec des moyens complémentaires des moyens de verrouillage 6, pour assurer le déplacement de celui-ci entre la position active représentée sur cette figure 4 et une position escamotée, à l'intérieur de la douille 12.

Ce pion comporte une butée 11a en appui sur la douille 12 lorsque celui-ci est en position active.

En position active, ce pion 11 est adapté pour coopérer avec des évidements complémentaires, par exemple 14, reliés à l'autre pièce, c'est-à-dire dans l'exemple de réalisation, au corps 3, pour assurer l'immobilisation du corps par rapport à la structure de fixation.

Dans cet exemple de réalisation, l'évidement 14 et les autres évidements des moyens d'immobilisation sont ménagés dans une plaque, par exemple 15, fixée sur ce corps 3, ces évidements délimitant ainsi différentes positions d'immobilisation de sécurité du corps le long de sa course de réglage dans la structure.

Le pion 11 est sollicité en position active par l'intermédiaire par exemple de moyens élastiques 16, tels qu'un ressort hélicoïdal disposé dans la douille 12 et sollicitant ce pion 11 à s'engager dans l'un des évidements 14 de la plaque.

On conçoit alors que selon la position de réglage du corps dans la structure de fixation et donc de la position relative de la plaque 15 reliée à ce corps et des évidements 14 de cette plaque, par rapport aux pions 11, par exemple reliés à la structure, chaque pion, qui est sollicité vers sa position active, peut s'engager dans l'un des ces évidements 14 pour assurer une immobilisation de sécurité du corps par rapport au reste de la structure, dans une position de réglage, afin de résoudre les problèmes de déplacements en cas de chocs évoqués précédemment.

Lorsque l'utilisateur manoeuvre les moyens de verrouillage 6 décrits précédemment, par exemple par l'intermédiaire d'un levier 17 de ceux-ci, il provoque alors une rotation de ceux-ci et la venue en contact d'un organe en forme de came 18 de ceux-ci avec la portion de manoeuvre 13 du pion 11, décrite précédemment, pour provoquer d' une part le déverrouillage des moyens de blocage 10 et d'autre part le déplacement du pion 11 depuis sa position active d'immobilisation du corps dans la structure, vers une position escamotée à l'intérieur de la douille 12, c'est-à-dire à l'extérieur de l'évidement 14 de la plaque 15, ce qui permet à l'utilisateur de déplacer le corps par exemple vers une nouvelle position de réglage en position de celui-ci dans la structure.

Lorsque l'utilisateur a sélectionné la nouvelle position de réglage, il replace les moyens de verrouillage 6 en position de blocage du corps en position dans la structure de fixation, par déplacement en sens inverse par exemple du levier 17 et verrouillage des moyens de blocage 10.

Ceci se traduit alors d'une part par un blocage du corps en position grâce aux moyens de verrouillage, et d'autre part par un relâchement de la portion de manoeuvre 13 de chaque pion 11 par l'organe en forme de came 18, les pions, sous l'effet de la sollicitation du ressort 16, ayant alors tendance à se déplacer de leur position escamotée à l'intérieur de la douille 12, vers leur position active en s'engageant dans l'un des évidements 14 de la plaque 15.

Dans le cas où la position du corps dans la structure, sélectionnée par l'utilisateur, correspond à une position d'un évidement 14 en regard d'un pion 11, celui-ci peut se déplacer vers sa position active d'immobilisation en pénétrant dans cet évidement.

Par contre, si dans la position sélectionnée, aucun des évidements 14 ne se trouve en regard d'un pion 11, celui-ci reste en appui contre la plaque 15 dans laquelle sont ménagés ces évidements, jusqu'à ce qu'un léger déplacement du corps et donc de cette plaque 15 se produise, pour amener l'un des évidements 14 en regard d'un pion 11, qui peut alors pénétrer dans cet évidement pour provoquer l'immobilisation de sécurité du corps dans la structure.

On notera à cet égard que des moyens d'immobilisation de sécurité de ce type peuvent être utilisés, que l'ensemble de colonne de direction soit réglable en position angulaire et/ou axiale.

Dans le cas où l'ensemble de colonne est un ensemble de colonne à réglage axial, les évidements de la plaque sont alors ménagés par exemple le long d'un axe parallèle à l'axe de déplacement du corps de colonne dans la structure.

Dans le cas où l'ensemble de colonne est un ensemble de colonne à réglage angulaire, les évidements sont alors par exemple ménagés le long d'un axe parallèle à l'axe de déplacement angulaire du corps dans la structure.

Un ensemble de colonne de direction réglable en position angulaire et en position axiale peut également comporter de tels moyens, les évidements étant alors par exemple régulièrement répartis sur la plaque, pour délimiter différentes positions d'immobilisation possibles correspondant à différentes positions de réglage possibles.

On notera également qu'au moins deux pions identiques à celui décrit précédemment sont utilisés, ces pions étant adaptés pour coopérer avec deux évidements correspondants de la plaque.

Cependant, ces pions et/ou évidements sont alors décalés les uns par rapport aux autres pour multiplier les positions d'immobilisation possibles le long de la course de déplacement du corps de la structure et réduire ainsi la distance séparant deux positions d'immobilisation de sécurité consécutives.

Il va de soi bien entendu que différents modes de réalisation de ces moyens d'immobilisation de sécurité peuvent être envisagés.

C'est ainsi par exemple qu'une disposition inverse des pions et évidements correspondants peut être envisagée et dans ce cas les pions sont par exemple reliés au corps, tandis que les évidements sont ménagés par exemple dans l'un des flasques de la structure de fixation.

Enfin on notera que des formes de réalisation différentes de ces moyens peuvent être envisagées.

Ainsi par exemple ces moyens peuvent comporter des pions adaptés pour coopérer avec des parties en creux complémentaires formées par exemple par des crans de la plaque.

## Revendications

1. Système de verrouillage de sécurité pour un ensemble de colonne de direction réglable en position notamment de véhicule automobile, du type comportant une structure de fixation (2) de l'ensemble sur le reste de la structure du véhicule et dans laquelle est monté réglable en position un corps (3) de colonne de direction, dans lequel est monté rotatif un arbre de direction (4), le corps et la structure comportant des moyens complémentaires (6) de verrouillage du corps en position dans la structure, déplaçables entre une position active de blocage du corps en position dans celle-ci et une position escamotée de libération du corps, pour permettre son réglage en position dans la structure, la structure (2) et le corps (3) comportant en outre des moyens complémentaires (11,12,13,14,15,16) d'immobilisation de sécurité du corps (3) en position de réglage dans la structure (2), déplaçables sous la commande des moyens de verrouillage (6), entre une position active d'immobilisation de sécurité et une position escamotée de réglage de la position du corps, caractérisé en ce que les moyens d'immobilisation de sécurité comprennent au moins deux pions (11) reliés à l'une des pièces, structure (2) ou corps de colonne (3), et adaptés pour coopérer avec des évidements complémentaires (14) de l'autre pièce, corps de colonne (3) ou structure (2), et délimitant des positions d'immobilisation de sécurité le long de la course de réglage du corps dans la structure, les pions et les évidements complémentaires étant décalés pour réduire la distance séparant deux positions d'immobilisation de sécurité consécutives.

2. Système de verrouillage de sécurité selon la revendication 1, caractérisé en ce que chaque pion (11) est déplaçable entre une position active d'immobilisation et une position escamotée sous la commande des moyens de verrouillage (6).

3. Système de verrouillage de sécurité selon la revendication 1 ou 2, caractérisé en ce qu'il comporte des moyens élastiques (16) de sollicitation de chaque pion (11) en position active et en ce que chaque pion (11) comporte une portion de manoeuvre (13) adaptée pour coopérer avec des moyens complémentaires (18) des moyens de verrouillage (6), de déplacement de celui-ci vers sa position escamotée.

4. Système de verrouillage de sécurité selon la revendication 3, caractérisé en ce que les moyens complémentaires des moyens de verrouillage comportent un organe en forme de came (18) adapté pour coopérer avec la portion de manoeuvre (13) de chaque pion (11) lors de la manoeuvre des moyens de verrouillage (6).

5. Système de verrouillage de sécurité selon l'une quelconque des revendication précédentes, caractérisé en ce que chaque pion (11) est disposé dans une douille (12) fixée sur la structure de fixation (2) tandis que les évidements (14) sont ménagés dans une plaque (15) fixée sur le corps.

## Claims

1. Security locking system for a steering column assembly which is adjustable in position, notably for a motor vehicle, of the type comprising a fixing structure (2) for attaching the assembly to the rest of the vehicle structure and in which a steering column body (3) is mounted so as to be adjustable in position, a steering shaft (4) being rotatably mounted in said body (3), the body and the structure comprising complementary means (6) for locking the body in position in the structure, said means (6) being movable between an active position for securing the body in position therein and a retracted position releasing the body, to enable it to be adjusted in position in the structure, the structure (2) and the body (3) further comprising complementary means (11, 12, 13, 14, 15, 16) for securely immobilizing the body (3) in the adjustment position in the structure (2), said means being movable under the control of the locking means (6) between an active secure immobilisation position and a retracted position for adjusting the position of the body, characterised in that the security immobilizing means comprise at least two studs (11) connected to either the structure (2) or the column body (3), adapted to cooperate with complementary recesses (14) in the other part, i.e. the column body (3) or structure (2), and defining secure immobilising positions along the adjustment path of the body in the structure, the complementary studs and recesses being offset in order to reduce the distance between two consecutive secure immobilising positions.

2. Security locking system according to claim 1, characterised in that each stud (11) is movable between an active immobilising position and a retracted position under the control of the locking means (6).

3. Security locking system according to claim 1 or 2, characterised in that it comprises resilient means (16) for biasing each stud (11) into the active position and in that each stud (11) comprises a manoeuvring portion (13) adapted to cooperate with means (18) complementary to the locking means (6), for moving the stud into its retracted position.

4. Security locking system according to claim 3, characterized in that the means complementary to the locking means comprise a cam-shaped member (18) adapted to co-operate with the manoeuvring portion (13) of each stud (11) during the manoeuvring of the locking means (6).

5. Security locking system according to any one of the preceding claims, characterized in that each stud (11) is located in a socket (12) attached to the fixing structure (2), whilst the recesses (14) are formed in a plate (15) fixed to the body.

## Patentansprüche

1. Sicherheitsverriegelungsvorrichtung für eine in ihrer Position einstellbare Lenksäulenanordnung, insbesondere eines Kraftfahrzeuges, mit einer Befestigungsstruktur (2) der Anordnung auf dem Rest der Struktur des Fahrzeuges, worin ein Körper (2) der Lenksäule einstellbar in seiner Position angebracht ist, in dem eine Lenkwelle (4) drehbar angebracht ist, wobei der Körper und die Struktur komplementäre Verriegelungsmittel (6) zur Verriegelung des Körpers in seiner Position in der Struktur aufweisen, welche verstellbar sind zwischen einer aktiven Blockierungsposition des Körpers an seiner Position darin und einer eingezogenen Position zur Befreiung des Körpers zum Ermöglichen seiner Positionseinstellung in der Struktur, wobei die Struktur (2) und der Körper (3) außerdem komplementäre Sicherungsmittel (11, 12, 13, 14, 15, 16) zur Immobilisierung des Körpers (3) in seiner Einstellposition in dar Struktur (2) aufweisen, welche unter dem Einfluß der Verriegelungsmittel (6) verstellbar sind zwischen einer aktiven Immobilisierungsposition zur Sicherung und einer eingezogenen Position zur Einstellung des Körpers, dadurch gekennzeichnet, daß die Sicherungsmittel zur Immobilisierung zumindest zwei Klötze (11) aufweisen, welche auf einem der folgenden Teile ruhen, der Struktur (2) oder dem Körper der Säule (3), und zum Zusammenwirken mit komplementären Ausnehmungen (14) des anderen Teil vom Körper der Säule (3) oder der Struktur (2) gestaltet sind und Sicherungsimmobilisierungspositionen entlang des Verlaufs der Einstellung des Körpers in der Struktur begrenzen, wobei die Klötze und die komplementären Ausnehmungen zum Reduzieren des Abstands zwischen zwei aufeinanderfolgenden Sicherungsimmobilisierungspositionen versetzt sind.

2. Sicherheitsverriegelungsvorrichtung nach Anspruch 1, dadurch gekennzeichnet, daß jeder Klotz (11) zwischen einer aktiven Immobilisierungsposition und einer eingezogenen Position unter der Einwirkung der Verriegelungsmittel (6) verstellbar ist.

3. Sicherheitsverriegelungsvorrichtung nach Anspruch 1 oder 2, dadurch gekennzeichnet, daß sie eine elastische Einrichtung (16) zum Vorspannen jedes Klotzes (11) in der aktiven Position aufweist und daß jeder Klotz (11) einen Bewegungsabschnitt (13) aufweist, welcher zum Zusammenwirken mit den komplementären Mitteln (18) der Verriegelungsmittel (6) zum Versetzen desselben in seine eingezogene Position gestaltet ist.

4. Sicherheitsverriegelungsvorrichtung nach Anspruch 3, dadurch gekennzeichnet, daß die komplementären Verriegelungsmittel ein Organ in Form eines Nockens (18) aufweisen, der zum Zusammenwirken mit dem Bewegungsabschnitt (13) jedes Klotzes (11) während des Bewegens der Verriegelungsmittel (6) gestaltet ist.

5. Sicherheitsverriegelungsvorrichtung nach einem der vorhergehenden Ansprüche, dadurch gekennzeichnet, daß jeder Klotz (11) in einer Buchse (12) so angeordnet ist, die in der Befestigungsstruktur (2) befestigt ist, daß die Ausnehmungen (14) in einer Verstärkung (15), die am Körper befestigt ist, untergebracht sind.
